(19) **Europäisches Patentamt**

**European Patent Office**

**Office européen des brevets**

(11) **EP 1 605 716 A1**

(12) **EUROPEAN PATENT APPLICATION**

(43) Date of publication:
**14.12.2005 Bulletin 2005/50**

(51) Int Cl.⁷: **H04Q 7/32**, H04Q 7/38

(21) Application number: **04291481.2**

(22) Date of filing: **11.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (71) Applicant: **Axalto SA**<br>**92120 Montrouge (FR)**<br><br>(72) Inventor: **Saran, Swami, c/o Axalto SA**<br>**92120 Montrouge (FR)** |

(54) **Method and device to authenticate customers in a mobile phone network**

(57)     The inventions relates to a method and device to authenticate customers in a mobile phone network. A secret key is randomly selected from a multitude of secret keys stored on a smartcard (SIM), an authentication algorithm is randomly selected from a multitude of authentication algorithms implemented on the smartcard and the randomly selected algorithm is executed using the randomly selected secret key to generate a value used in authenticating the customer.

Fig. 3

**Description**

BACKGROUND OF THE INVENTION

*Field of the invention*

The present invention relates to a GSM SIM card. In particular it relates to a method and device to authenticate customers in a mobile phone network

*Background art*

The GSM fraud-prevention framework relies on special cryptographic codes to authenticate customers and bill them appropriately. A personalized smartcard (also called a SIM card; SIM = Subscriber Identity module) in the cell phone stores a secret key (K) which is used to authenticate the customer; knowledge of the key is sufficient to make calls billed to that customer. The tamper-resistant smart card is supposed to protect the key from disclosure (even against adversaries which may have physical access to the SIM). Authentication is done with a cryptographic challenge/ response-protocol, which allows the SIM to "prove" knowledge of the key to the service provider, thus authorizing a call.
The authentication algorithm presently used in smartcards for the authentication of customers in a mobile phone network is called COMP128 There exist three versions of this algorithm called COMP128 V1, COMP128 V2 and COMP128 V3 respectively, where each version has an increasing degree of complexity. Current smartcards implement only one these versions.
The authentication algorithm is a function of a secret key (K) and a random number (Rand) and generates a result (SRES) according to the following equation:

$$SRES = COMP128 \ (K, Rand) \qquad \text{(Equation 1)}$$

The result (SRES) is passed on by the mobile equipment (as calculated by the SIM) to the authentication center (AuC) in the GSM network where a similar authentication calculation is done as the authentication center already knows about the secret key K and authentication algorithm used in the card. The result generated by the authentication center is compared with the result generated by the SIM, if they match the SIM is authenticated to the network.
Thus knowing the secret key K would let an attacker allow to clone the card. To determine the secret key K the attacker may generate a series of different SRES using different random values Rand, as follows:

| Rand | SRES |
|------|------|
| Rand1 | SRES1 |
| Rand2 | SRES2 |
| Rand3 | SRES3 |
| ... | ... |
| ... | ... |
| ... | ... |
| Randn | SRESn |

With enough queries and using mathematical techniques of correlation and regression an equation can then be determined to derive the secret key K :

$$K = Func \ (SRES, Rand) \qquad \text{(Equation 2)}$$

However, since existing SIM cards implement only one type of authentication algorithm and only one secret key K to generate the authentication result, they are quite vulnerable to the above described attack.

SUMMARY OF THE INVENTION

It is therefore an object of this invention to make the SIM card less vulnerable to fraud attacks, and to make the card more secure and more difficult to be cloned by determination of the secret key K.

This object is achieved by a method and a device to authenticate customers in a mobile phone network as defined in independent claims 1 and 4. Preferred embodiments are defined in the dependent claims.

According to a preferred embodiment of the invention, the method for authenticating customers in a mobile phone network, comprises the steps of randomly selecting a secret key from a multitude of secret keys $(K_i)$, i = 1...n, stored on a smartcard (SIM); randomly selecting an authentication algorithm from a multitude of authentication algorithms $(A_j)$, j = 1...m, stored on the smartcard (SIM) and executing the randomly selected authentication algorithm using the randomly selected secret key to generate a value (SRES) used for authenticating a customer.

Advantageously, a new random combination is chosen upon every performance of an authentication to generate the result (SRES). Thus the two generated SRES do not map to the same secret keys $K_i$ and authentication algorithms $A_j$ and it is difficult for an attacker to determine the secret key K using mathematical tools of correlation and regression and, thus, to clone the card.

According to another preferred embodiment of the invention the multitude of authentication algorithms comprises one or several versions (V1, V2, V3) of the COMP128 authentication algorithm.

According to yet another preferred embodiment of the invention the multitude of authentication algorithms comprises the AES algorithm.

In still another embodiment of the invention, the smartcard for authenticating customers in a mobile phone network comprises a multitude of secret keys $(K_i)$, i = 1...n, stored on the card; a multitude of authentication algorithms $(A_j)$, j = 1...m, stored on the card; means (RAND GEN) for randomly selecting a secret key from the multitude of stored secret keys $(K_i)$ and for randomly selecting an algorithm from the multitude of authentication algorithms $(A_j)$ and means for executing the selected algorithm using the selected secret key, the smartcard being adapted to carry out the random combination of a secret key and an authentication algorithm as described above.

BRIEF DESCRIPTION OF THE DRAWINGS

The foregoing and other objects, aspects and advantages of the invention will be better understood from the following detailed description of a preferred embodiment of the invention with reference to the drawings, in which:

Fig. 1     shows a flow diagram illustrating a preferred embodiment of the method according to the invention;
Fig. 2     shows the components of a SIM-card according to a preferred embodiment of the invention;
Fig. 3     shows how authentication is realized from the side of the GSM network;
Fig. 4     is an illustration of the principle shown in Fig. 3.

DETAILED DESCRIPTION OF

A PREFERRED EMBODIMENT OF THE INVENTION

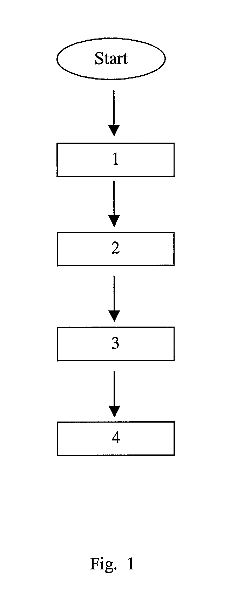

Referring now to the drawings, Fig.1 shows a flow diagram illustrating an embodiment of the method according to the invention.

In step 1, a random secret key $K_i$ is selected from a multitude of secret keys $(K_i)$, i = 1...n. The number n of secret keys is at least equal to two (2).

In step 2, a random authentication algorithm $A_j$ is chosen from a multitude of authentication algorithms $(A_j)$, j = 1...m implemented on the SIM-card. The number m of authentication algorithms is at least equal to two (2).

In step 3, the authentication algorithm randomly $A_j$ chosen in step 2 is executed using the secret key $K_i$ randomly chosen in step 1 to generate the result SRES.

In step 4, the result SRES is sent to the authentication center AuC.

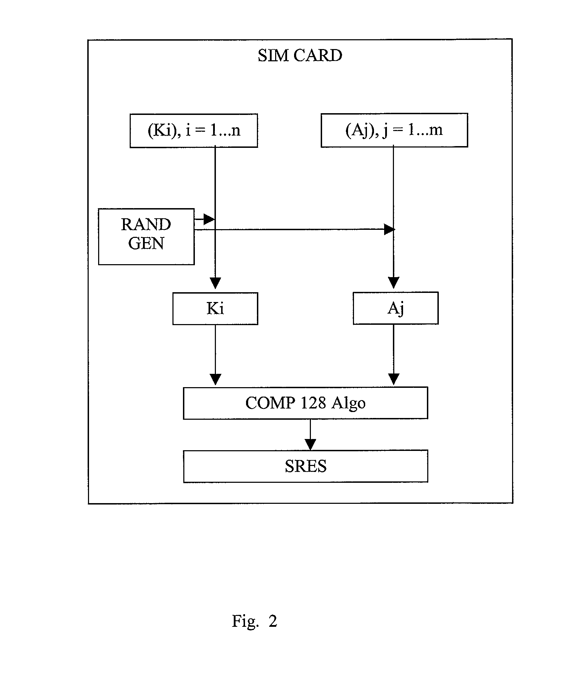

Fig. 2 shows a SIM-card according to an embodiment of the invention storing a multitude of secret keys $(K_i)$, i = 1...n and multiple implementations of authentication algorithms $(A_j)$, j = 1...m. A random generator is also implemented in the card that enables a random selection of a $K_i$ and a random selection of an authentication algorithm $A_j$ before doing an actual authentication calculation using and generating an authentication result SRES.

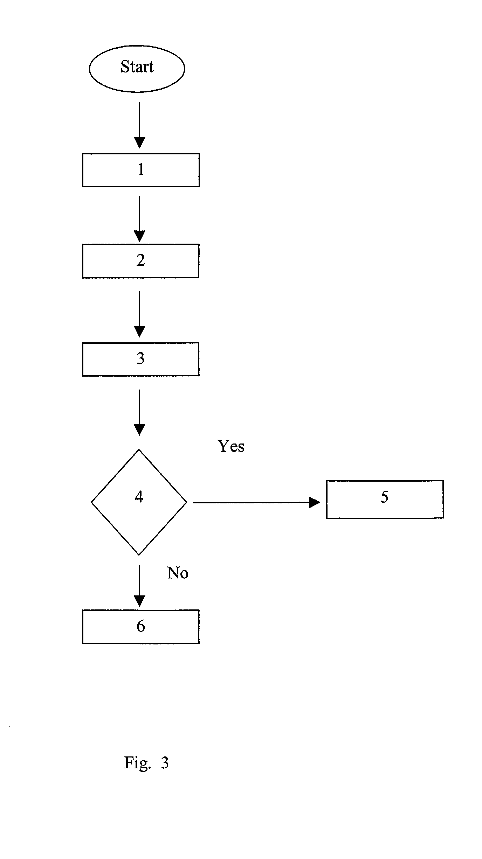

Fig. 3 shows how authentication is realized from the side of the GSM network. In step 1 an authentication request is sent to a SIM-card. In step 2 the authentication center AuC receives an SRES value computed by the SIM card using a random combination of a secret key $K_i$ and an authentication algorithm $A_j$. In step 3 the authentication center AuC combines all $(K_i)$ and $(A_j)$ stored at the center to obtain a multitude of n*m different SRES values. In step 4, the authentication center AuC compares the received SRES value with each of the multitude of the generated SRES values and the SIM card can log on to the network in step 5 if the received value is among the multitude of SRES values generated by the authentication center AuC. Otherwise the authentication fails, step 6.

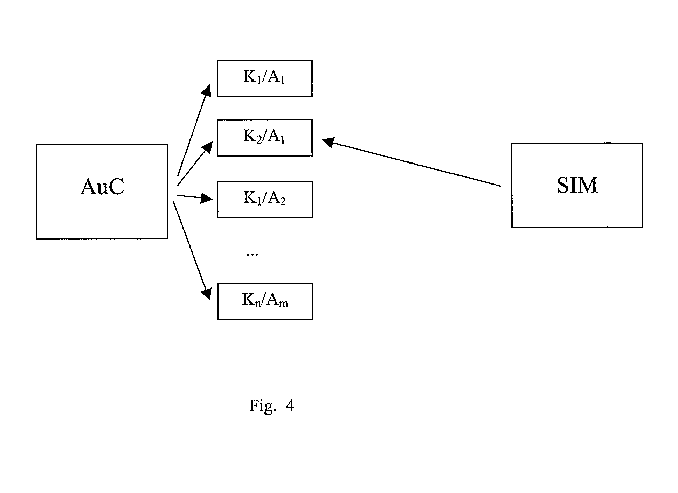

Fig. 4 is an illustration of the principle described with reference to Fig. 3. It shows that the authentication center generates a finite set of SRES values corresponding to different key/algorithm-combinations and that the smartcard must generate an SRES value within that set in order to authenticate the customer.

Increasing either the number of $K_i$ or number of authentication algorithms or both reduces the problem of hacking. More is their number less prone is the SIM card to $K_i$ attack.

**Claims**

1. Method for authenticating customers in a mobile phone network, comprising the steps of:

    a) randomly selecting a secret key from a multitude of secret keys ($K_i$), i = 1...n, stored on a smartcard (SIM);
    b) randomly selecting an authentication algorithm from a multitude of authentication algorithms ($A_j$), j = 1...m, stored on the smartcard (SIM);
    c) executing the randomly selected authentication algorithm using the randomly selected secret key to generate a value (SRES) used for authenticating a customer.

2. Method according to claim 1, wherein the multitude of authentication algorithms comprises one or several versions (V1, V2, V3) of the COMP128 authentication algorithm.

3. Method according to claim 1, wherein the multitude of authentication algorithms comprises the AES algorithm.

4. Smartcard (SIM) for authenticating customers in a mobile phone network, comprising
   a multitude of secret keys ($K_i$), i = 1...n stored on the card;
   a multitude of authentication algorithms ($A_j$), j = 1...m, implemented on the card;
   means (RAND GEN) for randomly selecting a secret key from the multitude of stored secret keys ($K_i$) and for randomly selecting an algorithm from the multitude of authentication algorithms ($A_j$) and
   the smartcard being adapted to carry out the method defined in claim 1.

5. Smartcard (SIM) according to claim 4, wherein the multitude of authentication algorithms ($A_j$), j = 1...m, implemented on the card comprises one or several versions (V1, V2, V3) of the COMP128 authentication algorithm.

6. Smartcard (SIM) according to claim 4, wherein the multitude of authentication algorithms ($A_j$), j = 1...m, implemented on the card comprises the AES algorithm.

Start

1

2

3

4

Fig. 1

Fig. 2

Fig. 3

Fig. 4

**European Patent Office**

## EUROPEAN SEARCH REPORT

Application Number

EP 04 29 1481

---

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/015692 A1 (RAYMOND GREEN M.) 22 January 2004 (2004-01-22) * page 1, paragraph 1 * * page 6, paragraph 93 - paragraph 94 * * page 6, paragraph 101 - page 7, paragraph 103 * ----- | 1-6 | H04Q7/32 H04Q7/38 |
| A | "UNIVERSAL MOBILE TELECOMMUNICATIONS SYSTEM- 3G SECURITY- CRITERIA FOR CYPTOGRAPHIC ALGORITHM DESIGN PROCESS" ETSI TR 133901, September 2001 (2001-09), pages 1-17, XP014005220 * page 14, line 14 - line 18 * ----- | 2,6 | |

| | | | TECHNICAL FIELDS SEARCHED (Int.Cl.7) |
|---|---|---|---|
| | | | H04Q |

The present search report has been drawn up for all claims

| Place of search | Date of completion of the search | Examiner |
|---|---|---|
| Berlin | 7 December 2004 | M. García |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 29 1481

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2004

| Patent document cited in search report | Publication date | Patent family member(s) | | Publication date |
|---|---|---|---|---|
| US 2004015692 A1 | 22-01-2004 | GB | 2366938 A | 20-03-2002 |
| | | AU | 7647601 A | 18-02-2002 |
| | | CN | 1444835 T | 24-09-2003 |
| | | EP | 1305969 A1 | 02-05-2003 |
| | | WO | 0213568 A1 | 14-02-2002 |